# EUROPEAN PATENT APPLICATION

(11) **EP 3 091 342 A1**
(43) Date of publication of application: **09.11.2016**
(21) Application number: 15166693.0
(22) Date of filing: 07.05.2015
(51) Int. Cl.: G01J 1/04, G01J 1/42, G01S 17/93, G01S 7/497

(54) **OPTICAL SENSOR DEVICE FOR A VEHICLE**

(71) Applicant: Conti Temic Microelectronic GmbH, 90411 Nürnberg (DE)
(72) Inventor: Terefe, Nehemia Girma, 88138 Weißensberg (DE)

(57) **Abstract**

The present application relates to an optical driver assis-tance systems mounted in a vehicle, and in particular to an optical autonomous emergency brake sensor of a vehicle. Further, the present application relates to an optical sensor device for a vehicle which is used as a rain sensor. Therein, an optical sensor device for a vehicle comprises a transmitting portion (11) for transmitting a light beam from the inside of the vehicle through a window of the vehicle to enable reflection of the light beam on objects in front of the window and a receiving portion (13) for receiving reflected light rays of the light beam, wherein the receiving portion (13) comprises an additional masking device (15, 21) and a photo-detector (16) positioned behind the additional masking device (15, 21) and wherein the additional masking device (15, 21) is designed to block the transmission of light rays being in an intended illumination field to the photo-detector (16) but allowing the transmission of reflected light rays being outside of the intended illumination field to the photo-detector (16).

## Description

The present application relates to an optical driver assistance systems mounted in a vehicle, and in particular to an optical autonomous emergency brake sensor of a vehicle.

An autonomous emergency brake sensor is usually installed behind a vehicle's windshield screen and works by illuminating the front scene of the vehicle with laser light and detecting the reflection of the laser light. The illumination region of such a sensor is usually restricted to a defined angular span or field of view. This inherently helps to look only at a desired region in front of the vehicle. However, presence of some refracting objects such as water drops, precipitations and snow particles tend to disturb the illumination field guiding the light in undesired direction. This may however result in false brake intervention on overhead reflectors, ground reflectors and side reflectors if the autonomous emergency brake sensor does not detect the existence of these refracting layers on the windscreen prior to actuating the brake.

Therefore, there is need for an optical system which is going to detect the existence of refracting layers such as water drops, ice particles on the windscreen of a vehicle and, hence the distortion of the illumination field, to assist on the proper functioning the autonomous emergency brake sensor and also on detection of rain for various rain detection systems.

Common vehicles are more and more equipped with electronic control units or driver assistance systems, which free the driver of the vehicle from routine tasks in order to enhance the comfort as well as the driving pleasure and simultaneously increasing safety while driving the vehicle.

For example, common vehicles are more and more equipped with electronic driver assistance systems to prevent accidents and/or reduce the consequences of such accidents. Such driver assistance systems are based on and, therefore, require information about the environment of the vehicle, which can be detected by means of various sensor technologies such as radar, ultrasound, lidar and other camera systems.

For example, an adaptive cruise control system (AAC) or an emergency brake system requires information about the distance to a vehicle ahead and the relative speed between the two vehicles. In order to obtain such data from the preceding vehicle usually radar sensors are used which measure the distance and the position of the preceding vehicle.

Recently, the trend is away from the costly radar sensors towards lidar sensors, which comprise an infrared emitter, a photodiode or a photo-detector for receiving the emitted infrared light and a transmitter. The sensor performs a propagation time measurement of the emitted infrared rays, wherein the time the light requires from the sensor to the vehicle and back is determined.

The document DE 101 35 457 A1 discloses an optical sensor device which comprises a transmitter-receiver device to emit light into an observation area and to detect light rays reflected from objects within the observation area.

A common lidar sensor typically comprises a masking device which is shaped according to a desired illumination field and, in particular according to the sensor's field of view. Thus, infrared rays which are not within the illumination field or the field of view are blocked by the masking device

Therefore, common lidar sensors are often equipped with a separately clocked light emitting diode (LED) as an additional light source, wherein the existing photo-detectors in conjunction with the respective masking devices are used to detect the existence of any foreign particle which could block the illumination or distort the illumination. Therein, the LED is positioned in such a way, that it ensures mostly the detection of geometrical reflections of light rays from foreign particles on a respective vehicle window. However, with such a system it is not possible to detect the existence of water drops and snow particles inside and outside of a vehicle window, due to the slightly different behavior of water drops and snow particles compared to other hard blockages, such as dust. Further, such an LED is very sensitive to alignment of the window, in particular the windshield and correspondingly changing angles of the windshield due to different customer needs, because of the dependence on geometrical reflection.

Therefore, optical sensor devices which are further capable of efficiently detecting the existence of refracting and transparent layers, such as water drops or snow particles, are desirable.

According to one embodiment of the present invention, an optical sensor device for a vehicle is provided, which comprises a transmitting portion for transmitting a light beam from the inside of the vehicle through a window of the vehicle to enable reflection of the light beam on objects in front of the window and a receiving portion for receiving reflected light rays of the light beam. Therein the receiving portion further comprises an additional masking device and a photo-detector positioned behind the additional masking device, wherein the additional masking device is designed to block the transmission of reflected light rays being in an intended illumination field to the photo-detector but allowing the transmission of reflected light rays being outside of the intended illuminated region to the photo-detector.

If a common optical sensor is used in a driver assistance system, for example an emergency brake system, the functionality of the driver assistance system can be affected if there is an extraneous amount of precipitation outside of the vehicle, which tends to disturb the illumination field guiding the light in an undesired direction. By employing an additional masking device which looks outside of the intended illumination or field of view, it can be ensured, that the respective photo-detector and, therefore, the optical sensor device can efficiently detect that the light rays are distorted, in particular are refracted by a precipitation outside of the vehicle and, therefore, that the functionality of the driver assistance system can be affected. Thus, an optical sensor device which is capable of efficiently detecting distortion of light rays due to refraction of the light rays by a precipitation outside of the vehicle is provided. Herein, that the photo-detector is positioned behind the additional masking device denotes that the reflected light rays reach additional masking device earlier than the photo-detector.

Therein, the optical sensor device can be a LIDAR system and the transmitting portion can include a laser diode of the LIDAR system. In LIDAR (Light Detection And Ranging) technology, a light signal can be emitted by a laser emitter (such as laser diode), for instance, and is later received by an associated detector. The LIDAR system can be for example a short range LIDAR (SRL) system. SRL systems are usually used in anti-collision protection systems for vehicles. In a common SRL system there are two coordinate axis, one for the laser emitter and one for the photo-detector, which have to cross each other before being able to detect any object or target in front of the sensor. Therein, a crossing point of the transmitter and the receiver field of view is usually behind the windscreen of the vehicle which makes the sensor unable to detect an object on the windscreen. Therefore, it is known to attach an additional separately clocked LED to such a SRL system, which acts as an additional light source and uses the existing photo-detector. Therein, the LED is usually positioned in such a way so as to ensure the detection of geometrical reflections of light reflected from a blockage on the window. Therefore, such a system is very sensitive to alignment of the window and correspondingly changing angles of the window due to different customer needs, because of the dependence on geometrical reflection. By employing an additional masking device which enables that only the light outside of the intended illumination field is detected, it is possible to use the laser diode of the short range LIDAR system as the light source and, thus, there is no need for an additional light source, such as an additional LED. Therefore, the detection of a precipitation outside of the vehicle does not depend on geometrical reflection of light rays refracted from moisture particles on the window, thus is not sensitive to an alignment of the window and correspondingly changing window angles and, therefore, the sensitivity of the detection of distortion of light rays due to refraction of the light rays by a precipitation outside of the vehicle can be significantly increased. In particular, in common SRL systems a transmitter lens generates a field of view which is collected all in all by the receiver lenses through the masking device which exactly looks like the field of view. Thus, by simply using a masking device which is opposite to the this field of view masking device, in particular a masking device where the light-transmissive areas are exchanged for the light-blocking areas, distortion of light rays due to refraction of the light rays by a precipitation outside of the vehicle can be efficiently detected. That the LIDAR system is a SRL system should merely be understood as an example, however, and the LIDAR system can be any other LIDAR system such as a flash LIDAR system, too.

Further, the additional masking device can be configured in such a way that only reflected light rays outside of the intended illumination and which reach the additional masking device in a lower region of the additional masking device with respect to a yaw axis of the vehicle are transmitted to the photo-detector. Since most of the light rays are refracted upwards by the precipitation on the window, in particular on a windshield because of the tilt of the windshield and, therefore, most of the reflected light rays reach the additional masking device in a lower region thereof with respect to a yaw axis of the vehicle, it is only necessary to configure the additional masking device in such a way that reflected light rays of the light beam which have been refracted by the precipitation and which reach the additional masking device in a lower region of the additional masking device are transmitted to the photo-detector in order to be capable of efficiently detecting distortion of light rays due to refraction of the light rays by a precipitation outside of the vehicle.

In some embodiments, the additional masking device has at least one hole in a region where the reflected light rays being outside of the intended illumination field and, therefore, reflected light rays which have been refracted by the precipitation reach the additional masking device, to permit the passage of reflected light rays from the light beam which have been refracted by the precipitation to the photo-detector while blocking the passage of other portions of the reflected light rays from the light beam which have not been refracted by the precipitation to the photo-detector. That holes are formed in the masking device to permit the passage of the reflected and refracted light rays should merely be understood as an example, however, and one or more apertures or transparent zones in an otherwise opaque plate or the like, can be formed in the masking device, too. Further, the additional masking device can be configured as a filtering mask with infrared filter elements, too.

According to another embodiment of the invention, a sensor system for a vehicle is provided, which comprises an optical sensor device as described above and a processing means for comparing a signal generated from the photo-detector corresponding to a quantity of light rays transmitted to the photo-detector to a reference signal indicating an extraneous amount of precipitation outside of the vehicle and generating a control or warning signal if the signal exceeds the reference signal.

By employing an additional masking device which looks outside of the intended illumination field, it can be ensured, that the respective photo-detector and, therefore, the optical sensor device can efficiently detect that the light rays are distorted, in particular are refracted by a precipitation outside of the vehicle. By further processing a signal generated from the photo-detector and corresponding to a quantity of light rays transmitted to the photo-detector and comparing this signal to a reference signal indicating an extraneous amount of precipitation on the window and generating a control or warning signal if the first signal exceeds the reference signal, the detected distortion can be further used to process a control or warning signal which can thereafter be used by other electronic control units or other driver assistance systems within the vehicle, for example by a windshield wiper. Thus, there is no need for an additional rain sensor, since the detected distortion can be further processed to detect an extraneous amount of precipitation outside of the vehicle, such as rain, thereby saving costs.

Thus, in some embodiments, the optical sensor device is a rain sensor, wherein the processing means compares the signal generated from the photo-detector corresponding to a quantity of light rays transmitted to the photo-detector to a reference signal indicating an extraneous amount of rain outside of the vehicle and generates a control or warning signal if the signal exceeds the reference signal indicating an extraneous amount of rain outside of the vehicle.

According to still another embodiment of the invention, a vehicle is provided, which comprises an optical sensor as described above.

If a common optical sensor is used in a driver assistance system of the vehicle, for example an emergency brake system, the functionality of the driver assistance system can be affected if there is an extraneous amount of precipitation outside of the vehicle, which tends to disturb the illumination field, guiding the light in an undesired direction. By employing an additional masking device which enables only the light outside the illumination field to be detected, it can be ensured, that the respective photo-detector and, therefore, the optical sensor device can efficiently detect that the light rays are distorted, in particular are refracted by a precipitation outside of the vehicle and, therefore, that the functionality of the driver assistance system can be affected. Thus, an optical sensor device which is capable of efficiently detecting distortion of light rays due to refraction of the light rays by a precipitation outside of the vehicle is provided. Herein, that the photo-detector is positioned behind the additional masking device denotes that the reflected light rays reach additional masking device earlier than the photo-detector.

Therein, the window of the vehicle can be a windshield of the vehicle. A windshield of an aircraft, vehicle, bus, motorbike or tram is the front window thereof. Since an optical sensor device of an emergency brake system is usually positioned behind a windshield of the vehicle in order to perform a time-of-flight measurement of the emitted infrared rays, wherein the time the light requires from the sensor to the vehicle and back is determined, the optical sensor device can be integrated into an emergency brake system without requiring major and expensive modifications.

According to still a further embodiment of the invention, a vehicle is provided which comprises a sensor system as described above.

By employing an additional masking device which enables only the light outside the illumination field to be detected, it can be ensured, that the respective photo-detector and, therefore, the optical sensor device can efficiently detect that the light rays are distorted, in particular are refracted by a precipitation outside of the vehicle. By further processing a signal generated from the photo-detector and corresponding to a quantity of light rays transmitted to the photo-detector and comparing this signal to a reference signal indicating an extraneous amount of precipitation on the window and generating a control or warning signal if the signal exceeds the reference signal, the detected distortion can be further used to process a control or warning signal which can thereafter be used by other electronic control units or other driver assistance systems within the vehicle, for example by a windshield wiper. Thus, there is no need for an additional rain sensor within the vehicle, since the detected distortion can be further processed to detect an extraneous amount of precipitation outside of the vehicle, such as rain, thereby saving costs.

Embodiments of the invention will now be described with reference to the drawings.
- Figure 1: illustrates a vehicle equipped with an autonomous emergency brake sensor;
- Figure 2: illustrates an optical sensor device according to a first embodiment of the present invention;
- Figure 3: illustrates an optical sensor device according to a second embodiment of the present invention;

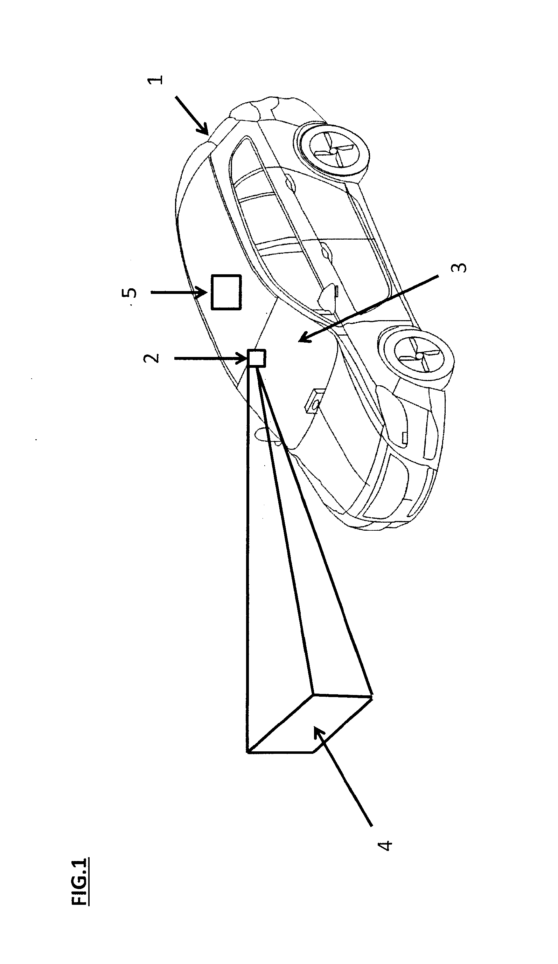

Figure 1 illustrates a vehicle 1 equipped with an autonomous emergency brake sensor 2.

As can be seen in figure 1, the autonomous emergency brake sensor 2 is installed behind a windshield 3 of the vehicle 1. The shown autonomous emergency brake sensor 2 works by illuminating the front scene of the vehicle 1 with laser light and detecting the reflection of the laser light, wherein the illumination field of the sensor 2 is indicated by reference sign 4.

There is further shown a processing means 5 coupled to the sensor 2 and configured to further process signals generated by the sensor 2.

The illumination region of such a sensor 2 is usually restricted to a defined angular span or field of view. This inherently helps to look only at a desired region in front of the vehicle. However, presence of some refracting objects such as water drops, precipitations and snow particles tend to disturb the illumination field guiding the light in undesired direction. This may however result in false brake intervention on overhead reflectors, ground reflectors and side reflectors if the autonomous emergency brake sensor does not detect the existence of these refracting layers on the windscreen prior to actuating the brake.

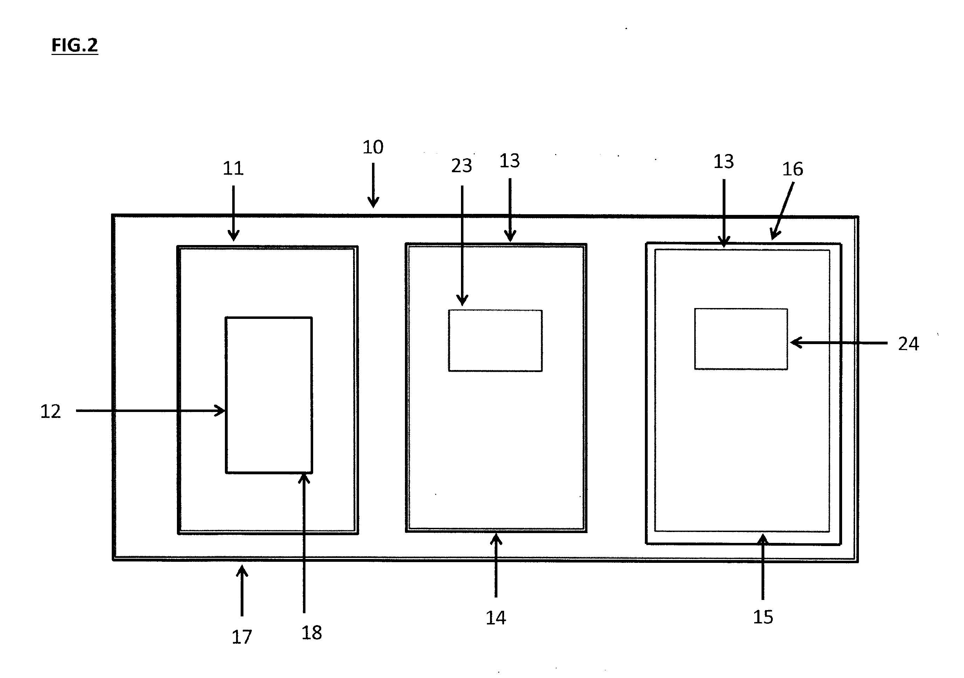

Figure 2 illustrates an optical sensor device 10 according to a first embodiment of the present invention.

The shown optical sensor device 10 which comprises a transmitting portion 11, which includes a light source 12 for transmitting a light beam from the inside of the vehicle through a window of the vehicle to enable reflection of the light beam on objects in front of the window of the vehicle, and a receiving portion 13 for receiving reflected light rays of the light beam. As can be seen in figure 2, the receiving portion comprises a masking device 14 which is designed to allow the transmission of reflected light rays being inside of an intended illumination field to a photo-detector positioned behind the masking device 14 and to block the transmission of reflected light rays being outside of the intended illumination field to the photo-detector. In particular, the shown masking device 14 is designed to allow the transmission of reflected light rays to the photo-detector which impinge on the masking device 14 in the area indicated with reference sign 23 and to block the transmission of reflected light rays to the photo-detector which impinge on the masking device 14 in any other region thereof. Thus, the area indicated with reference sign 23 symbolizes the intended illumination field.

According to the shown embodiment, the receiving portion 13 further comprises an additional masking device 15 and a photo-detector 16 positioned behind the additional masking device 15, wherein the additional masking device 15 is designed to block the transmission of reflected light rays from the intended illuminated field to the photo-detector 16 but allowing the transmission of reflected light rays from outside the intended illuminated field and, thus of reflected light rays of the light beam which have been refracted by the precipitation, to the photo-detector 16. In particular, the shown additional masking device 15 is designed to block the transmission of reflected light rays to the photo-detector 16 which impinge on the additional masking device 15 in the area indicated with reference sign 24 and to allow the transmission of reflected light rays to the photo-detector 16 which impinge on the additional masking device 15 in any other region thereof. Thus, the area indicated with reference sign 24 symbolizes the intended illumination field.

By employing an additional masking device 15 which prevents the transmission of reflected light rays from the intended illuminated field from reaching the photo-detector 16 unless the light ray is refracted by the precipitation, such as water drops, ice or snow particles outside of the vehicle, for example on an outer surface of the window of the vehicle, it can be ensured, that the optical sensor device 10 is capable of efficiently detecting distortion of light rays due to refraction of the light rays by a precipitation outside of the vehicle, thereby assuring the functionality of a driver assistance system which uses the optical sensor device 10.

According to the embodiment shown in figure 1, the optical sensor device 10 is a LIDAR system, in particular a short range LIDAR system 17 (SRL) and the light source 12 is a laser diode 18 of the short range LIDAR system 17. Common short range LIDAR systems include a pulsed laser source, such as typical low cost sources used for range finders such as for example pulsed high power laser diodes, a pulsed fiber laser, a pulsed solid state Q-switched chip laser or any other type of pulsed laser generating an appropriate light beam. Furthermore, such SRL systems are usually used in conjunction with an anti-collision protection system for vehicles.

The presence of particles in the optical path of the light beam reflected on the object in front of the vehicle will have the effect of scattering the light beam, and a portion thereof will be back-scattered towards the short range LIDAR system 17. The term "scattering" is used herein to refer in the large sense to the dispersal of the light beam by the particles as a result of physical interactions therewith.

A short range LIDAR system 17 further typically includes a light collecting arrangement having a field of view intersecting the optical path within the operation range of the apparatus. The light collecting arrangement therefore receives the back-scattered light within its field of view.

Thus, there is no need for an additional light source, such as an additional LED, for detecting back-scattered light rays and the detection of distortion due to a precipitation outside of the vehicle. Thus, the detection of distortion due to a precipitation outside of the vehicle does not depend on geometrical reflection of light rays refracted from moisture particles on the window, thus is not sensitive to an alignment of the window and correspondingly changing window angles and, therefore, the sensitivity of the detection of distortion of light rays due to refraction of the light rays by a precipitation outside of the vehicle can be significantly increased.

Further, the optical sensor device 10 can be coupled to a processing, which is configured for comparing a signal generated from the photo-detector 16 and corresponding to a quantity of light rays transmitted to the photo-detector 16 to a reference signal, stored in a storage unit integrated into or external to the processing means and indicating an extraneous amount of precipitation outside of the vehicle, for example on the window and for generating a control or warning signal if the signal exceeds the reference signal or a normal channel for the amount of precipitation outside of the vehicle. Thus, the detected distortion can be further used to process a control or warning signal which can thereafter be used by other electronic control units or other driver assistance systems within the vehicle, for example by a windshield wiper. Therefore, there is no need for an additional rain sensor within the vehicle, since the detected distortion can be further processed to detect an extraneous amount of precipitation outside of the vehicle, such as rain, thereby saving costs.

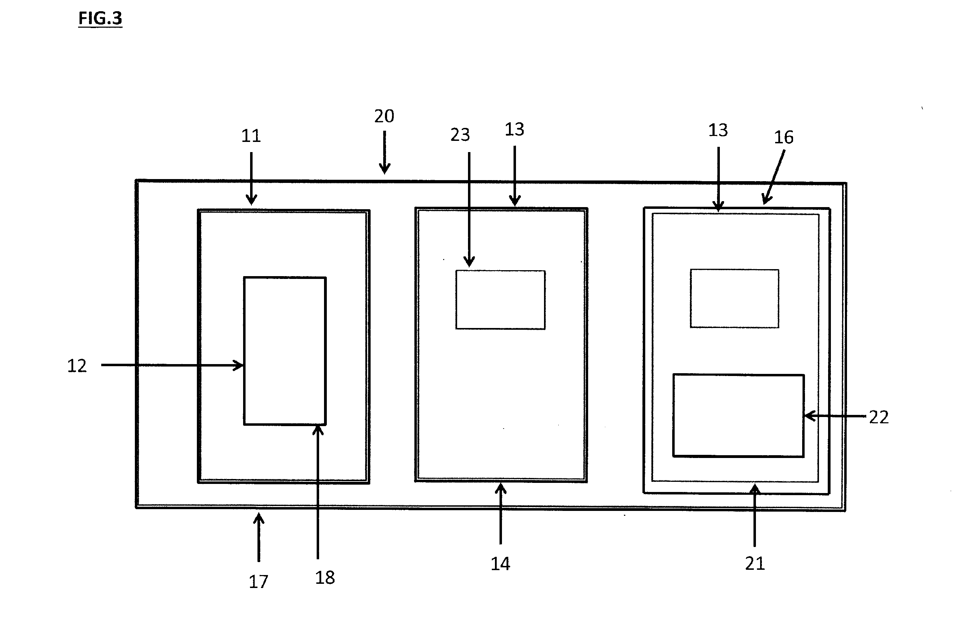

Figure 3 illustrates an optical sensor device 20 according to a second embodiment of the present invention. Therein, identical structural features as within the embodiment shown in figure 2 are identified by identical reference symbols.

According to figure 3, the difference between the optical sensor device 20 of the shown second embodiment and optical sensor device 10 of the first embodiment is that the additional masking device 21 of the optical sensor device 20 according to the second embodiment is configured in such a way that only reflected light rays being outside of the intended illumination field and which reach the additional masking device 21 in a lower region of the additional masking device 21 with respect to a yaw axis of the vehicle are transmitted to the photo-detector 16. In particular, the shown additional masking device 21 is designed to allow the transmission of reflected light rays to the photo-detector which impinge on the additional masking device 21 in the area indicated with reference sign 22 and to block the transmission of reflected light rays to the photo-detector which impinge on the additional masking device 21 in any other region thereof.

To accomplish that only reflected light rays being outside of the intended illumination field and which reach the additional masking device 21 in a lower region of the additional masking device 21 with respect to a yaw axis of the vehicle are transmitted to the photo-detector 16, one single hole 22 formed in a lower region of the additional masking device 21 with respect to a yaw axis of the vehicle. Since most of the light rays are reflected on an upper region of the object in front of the vehicle and, therefore, most of the light rays reflected from the object reach the additional masking device in a lower region thereof with respect to a yaw axis of the vehicle, it is only necessary to configure the additional masking device in such a way that reflected light rays of the light beam which have been refracted by the precipitation and which reach the additional masking device in a lower region of the additional masking device are transmitted to the photo-detector in order to be capable of efficiently detecting distortion of light rays due to refraction of the light rays by a precipitation outside of the vehicle.

That holes are formed in the masking device to permit the passage of the reflected and refracted light rays should merely be understood as an example, however, and one or more apertures or transparent zones in an otherwise opaque plate or the like, can be formed in the masking device, too. Further, the additional masking device can be configured as a filtering mask with infrared filter elements, too.

### List of reference signs

- 1: vehicle
- 2: autonomous emergency brake sensor
- 3: windshield
- 4: illumination field
- 5: processing means
- 10: sensor device
- 11: transmitting portion
- 12: light source
- 13: receiving portion
- 14: masking device
- 15: additional masking device
- 16: photo-detector
- 17: short range LIDAR system
- 18: laser diode
- 20: optical sensor device
- 21: additional masking device
- 22: hole
- 23: intended illumination field
- 24: intended illumination field

## Claims

1. An optical sensor device for a vehicle which comprises a transmitting portion (11) for transmitting a light beam from the inside of the vehicle through a window of the vehicle to enable reflection of the light beam on objects in front of the window and a receiving portion (13) for receiving reflected light rays of the light beam, wherein the receiving portion (13) comprises an additional masking device (15, 21) and a photo-detector (16) positioned behind the additional masking device (15, 21) and wherein the additional masking device (15, 21) is designed to block the transmission of light rays being in an intended illumination field to the photo-detector (16) but allowing the transmission of reflected light rays being outside of the intended illumination field to the photo-detector (16).

2. The optical sensor device according to claim 1, wherein the optical sensor device (10, 20) is a LIDAR system (17) and wherein the transmitting portion (11) includes a laser diode (18) of the LIDAR system (17).

3. The optical sensor device according to claim 1 or 2, wherein the additional masking device (21) is configured in such a way that only reflected light rays being outside of the intended illumination field and which reach the additional masking device (21) in a lower region of the additional masking device (21) with respect to a yaw axis of the vehicle are transmitted to the photo-detector (16).

4. The optical sensor device according to one of claims 1 to 3, wherein the additional masking device (15, 21) has at least one hole (22) in a region where the reflected light rays being outside of the intended illumination field reach the additional masking device (15, 21).

5. A sensor system for a vehicle which comprises an optical sensor device (10, 20) according to one of claims 1 to 4 and a processing means for comparing a signal generated from the photo-detector (16) corresponding to a quantity of light rays transmitted to the photo-detector (16) to a reference signal indicating an extraneous amount of precipitation outside of the vehicle and generating a control or warning signal if the signal exceeds the reference signal.

6. The sensor system according to claim 5, wherein the optical sensor device (10,20) is a rain sensor and wherein the processing means compares the signal generated from the photo-detector (16) corresponding to a quantity of light rays transmitted to the photo-detector (16) to a reference signal indicating an extraneous amount of rain outside of the vehicle and generates a control or warning signal if the signal exceeds the reference signal indicating an extraneous amount of rain outside of the vehicle.

7. A vehicle which comprises an optical sensor device (10, 20) according to one of claims 1 to 4.

8. The vehicle according to claim 7, wherein the window is a windshield of the vehicle.

9. A vehicle which comprises a sensor system according to claim 5 or 6.
